Europäisches Patentamt

European Patent Office

Office européen des brevets

(11) Veröffentlichungsnummer : **0 110 062**
**B1**

(12) **EUROPÄISCHE PATENTSCHRIFT**

(45) Veröffentlichungstag der Patentschrift :
28.05.86

(51) Int. Cl.⁴ : **A 47 J 27/62**

(21) Anmeldenummer : **83109986.6**

(22) Anmeldetag : **06.10.83**

(54) **Einrichtung an einem Kochgefäss insbesondere Dampfdruckkochtopf.**

(30) Priorität : **20.10.82 DE 3238769**

(43) Veröffentlichungstag der Anmeldung :
**13.06.84 Patentblatt 84/24**

(45) Bekanntmachung des Hinweises auf die Patenterteilung : **28.05.86 Patentblatt 86/22**

(84) Benannte Vertragsstaaten :
**AT BE CH FR GB IT LI LU NL SE**

(56) Entgegenhaltungen :
CH-A-   467 052
DE-A- 2 910 789
DE-A- 2 932 039
FR-A-   997 906
GB-A-   660 077
GB-A- 2 029 722
GB-A- 2 057 858
US-A- 2 194 117
US-A- 3 187 163

(73) Patentinhaber : **Kurt Wolf & Co. KG**
**Langwiesenweg 67/71**
**D-7547 Wildbad (DE)**

(72) Erfinder : **Wolfram, Andre, Dipl.-Ing.**
**Eichenweg 7**
**D-7307 Aichwald 4 (DE)**

(74) Vertreter : **Vogel, Georg**
**Hermann-Essig-Strasse 35 Postfach 105**
**D-7141 Schwieberdingen (DE)**

**Beschreibung**

Die Erfindung betrifft eine Einrichtung an einem aus Kochtopf und Deckel bestehenden Kochgefäß, insbesondere Dampfdruckkochtopf, mit einem am Kochgefäß angebrachten Temperatursensor, der ein der Temperatur im Kochgefäß entsprechendes elektrisches Signal abgibt, bei der Temperatursensor auf der Außenseite des Kochtopfes in wärmeleitender Verbindung angebracht ist.

Ein Kochgefäß dieser Art ist durch die CH-A 467 052 bekannt. Der Temperatursensor ist dabei im unteren Bereich der Topfwandung angebracht und das Heizelement ist fest mit dem Topfboden verbunden. Ein derartiges Kochgefäß ist nicht nur sehr teuer, die Temperaturmessung ist jedoch gerade in der Aufheizphase nicht genau genug, um aus der auftretenden Temperatur-Zeit-Charakteristik Anhaltspunkte über Art und Menge des Kochgutes im Kochgefäß ableiten zu können.

Durch die DE-A-29 32 039 ist eine Einrichtung bekannt, die zum Steuern der Koch- bzw. Garzeit verwendet wird. Der Temperatursensor ist dabei im Bereich des im Deckel angeordneten Überdruckventils angebracht und steuert ein Zeitglied, das nach einer vorwählbaren Zeit nach Erreichen einer Grenztemperatur im Kochgefäß eine Anzeige auslöst und das Ende der Koch- bzw. Garzeit anzeigt. An dem Überdruckventil ist zudem eine Anzeigevorrichtung angebracht, die den Druckaufbau in dem Kochgefäß anzeigt.

Bei dieser bekannten Einrichtung erfaßt der Temperatursensor eine Temperatur, die in der Aufheizphase des Kochgefäßes sehr stark von der Temperatur des eingefüllten Wassers abweicht. Es wird lediglich im aufgeheizten Zustand die Temperatur im Kochtopf annähernd genau erfaßt. Demzufolge ist auch die Steuerung des Zeitgliedes ohne Berücksichtigung der Aufheizphase. Die mechanische Anzeige der Dampfdruckphase ist nicht nur ungenau, sondern auch störanfällig. Erreicht das eingefüllte Wasser im Kochgefäß eine kritische Temperatur von 100 °C, dann spricht die mechanische Anzeigevorrichtung noch nicht an. Ein Öffnen des Kochgefäßes in dieser Phase ist aber bereits gefährlich.

Es ist Aufgabe der Erfindung, eine Einrichtung der eingangs erwähnten Art zu schaffen, mit der gerade in der Aufheizphase das Erreichen der kritischen Temperatur im eingefüllten Wasser sehr genau erfaßt und für eine exakte Anzeige dieses Zustandes, sowie für eine exakte Steuerung der Koch- bzw. Garzeit ausgenützt werden kann.

Diese Aufgabe wird nach der Erfindung dadurch gelöst, daß der Temperatursensor im Übergangsbereich zwischen Topfboden und Topfwand an einer Abgriffstelle angebracht ist, an der die Temperaturdifferenz zwischen der Temperatur des Wasserinhaltes und der Außentemperatur an der Abgriffstelle während des Aufheizvorganges annähernd Null ist.

Bei dieser Ausgestaltung der Einrichtung wird ohne Eingriff in den Innenraum des Kochgefäßes eine Temperaturmessung während der Aufheizphase ermöglicht, mit der das Erreichen der kritischen Temperatur sehr genau angezeigt werden kann. Die störanfällige mechanische Anzeigevorrichtung kann ersetzt werden, so daß eine Fehlanzeige des kritischen Zustandes ausgeschaltet ist. Die exakte Temperaturerfassung in der Aufheizphase bringt auch Vorteile bei der Steuerung eines Zeitgliedes für die Koch- bzw. Garzeit und bei der Regelung der Heizleistung, insbesondere bei größeren Heizleistungen. Die Einregelung der Grenztemperatur wird erleichtert und der Energiebedarf für den Koch- bzw. Garvorgang kann optimiert werden.

Eine gute wärmeleitende Verbindung zwischen dem Kochtopf und dem Temperatursensor wird nach einer Ausgestaltung dadurch erreicht, daß der Temperatursensor direkt mit der Außenfläche des Kochgefäßes verbunden, vorzugsweise verschweißt bzw. verklebt ist.

Dieselbe Wirkung kann nach einer weiteren Ausgestaltung auch dadurch erreicht werden, daß der Temperatursensor in einer Befestigungslasche umschlossen und in wärmeleitender Verbindung gehalten ist, die mittels einer Mutter und einer Federscheibe auf einem mit dem Kochtopf verbundenen Gewindebolzen fest verschraubt ist.

Bei der üblichen Ausgestaltung der Kochgefäße wird die Abgriffstelle für den Temperatursensor an den der Topfwand zugekehrten Anfang des konvexen Übergangsbereiches zum Topfboden gelegt. Diese Abgriffstelle erlaubt noch das einfache Anbringen des Temperatursensors, liegt aber zwangsläufig in dem Bereich, in dem ohne umfangreiche Messungen sichergestellt ist, daß die Temperaturdifferenz zwischen der Temperatur des Wasserinhaltes und der Außentemperatur an dieser Abgriffstelle sehr klein ist.

Nach einer weiteren Ausgestaltung ist vorgesehen, daß der an dem Kochtopf wärmeleitend festgelegte Temperatursensor mittels eines Ansatzes des an dem Kochtopf angebrachten Griffes abgedeckt ist. Bei der Befestigung des Temperatursensors mittels des am Kochtopf angebrachten Gewindebolzens läßt sich mit der Mutter auch der Ansatz des Griffes festlegen.

Der elektrische Anschluß des Temperatursensors und die Verbindung mit einem Auswertegerät wird nach einer Ausgestaltung dadurch erreicht, daß der Ansatz der Topfwand des Kochtopfes zugekehrt eine Aufnahme für ein Anschlußkabel des Temperatursensors aufweist und daß im Griff des Kochtopfes Anschlußkontakte für ein lösbar am Griff anbringbares Auswertegerät vorgesehen sind, an denen das Anschlußkabel angeschlossen ist.

Nach einer Ausgestaltung kann das Auswertegerät in den hohl ausgebildeten Griff des Kochtopfes bzw. des Deckels eingesetzt werden.

Der Anschluß des Auswertegerätes kann nach einer Ausgestaltung auch so ausgeführt sein, daß die Anschlußkontakte als Steckkontakte ausgebildet sind und daß das Auswertegerät mit daran angepaßten Gegensteckelementen versehen ist. Die Steckverbindung kann neben der elektrischen auch die mechanische Verbindung übernehmen.

Ein der Temperatur in dem interessierenden Temperaturbereich proportionales elektrisches Signal wird nach einer Ausgestaltung dadurch erhalten, daß ein NTC (Negativer Temperaturkoeffizient)- bzw. PTC (Positiver Temperaturkoeffizient)-Widerstand als Temperatursensor verwendet ist, der im Temperaturbereich von etwa 95 °C bis 120 °C eine hinreichend lineare Widerstands-Temperatur-Kennlinie aufweist, oder die durch bekannte Schaltungsmaßnahmen in diesem Bereich linearisiert ist.

Ist nach einer Ausgestaltung vorgesehen, daß das Auswertegerät bis zum Erreichen einer vorgegebenen kritischen Temperatur ein erstes Anzeigesignal abgibt, dann ist ein Kennzeichen gegeben, das dem Benützer das Erreichen der kritischen Temperatur und die damit verbundene Gefahr beim Öffnen des Kochgefäßes sicher anzeigt.

Ist in Weiterbildung vorgesehen, daß das Auswertegerät beim Überschreiten der kritischen Temperatur bis zu der vorgegebenen Grenztemperatur zusätzlich ein zweites Anzeigesignal abgibt und daß beim Erreichen der Grenztemperatur das Auswertegerät das erste und zweite Anzeigesignal abschaltet und ein drittes Anzeigesignal einschaltet, dann wird mit dem ersten und zweiten Anzeigesignal angezeigt, daß die für das Kochen bzw. Garen erforderliche Arbeitstemperatur vorhanden ist, während mit dem Auftreten des dritten Anzeigesignals eine Aufforderung zur Reduzierung der Heizleistung gegeben wird.

Die Erfindung wird anhand von in den Zeichnungen dargestellten Ausführungsbeispielen näher erläutert. Es zeigt :

Figur 1 ein Diagramm zur Ermittlung der optimalen Abgriffstelle für den Temperatursensor,

Figur 2 ein erstes Ausführungsbeispiel für die Anbringung des Temperatursensors an der Außenseite des Kochtopfes und

Figur 3 ein zweites Ausführungsbeispiel für die Anbringung des Temperatursensors an der Außenseite des Kochtopfes.

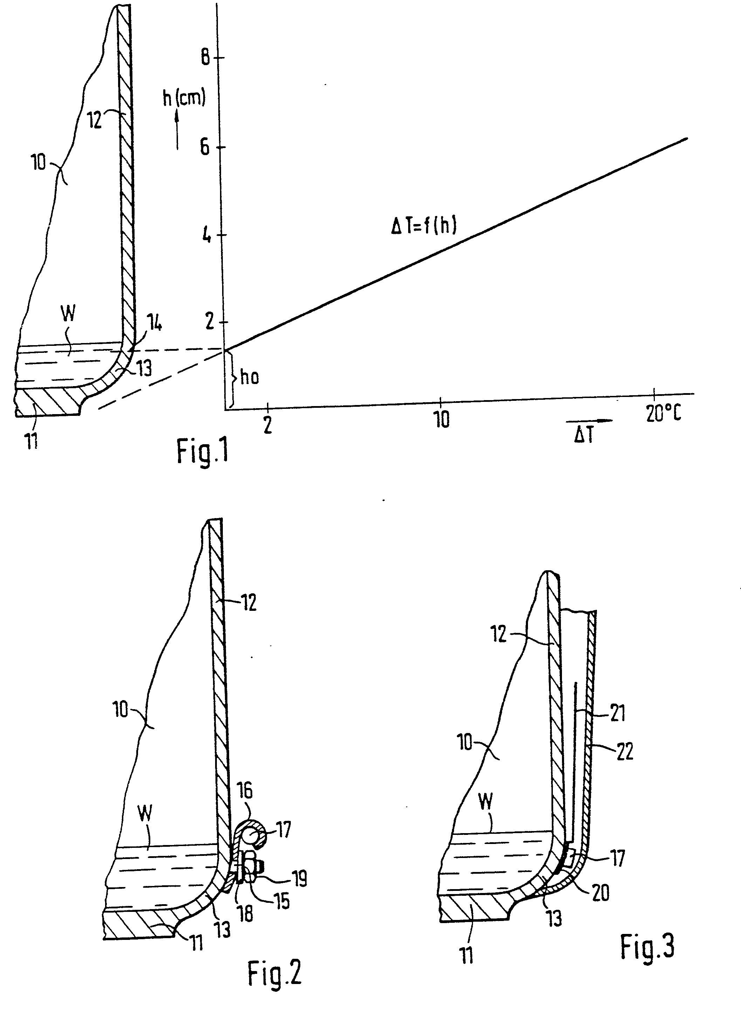

Das Diagramm $\Delta T = f(h)$ in Fig. 1 gilt für die Aufheizphase des Kochgefäßes. Dabei ist der Kochtopf 10 in bekannter Weise mittels eines nicht dargestellten Deckels verschlossen und der Topfboden 11 des Kochtopfes 10 steht auf der Heizplatte. Der in der Wandstärke dickere Topfboden 11 geht über den konvexen Übergangsbereich 13 in die Topfwand 12 über. Der Wasserinhalt W im Kochtopf 10 wird zur Dampferzeugung verwendet. Sobald dieser Wasserinhalt W eine kritische Temperatur von etwa 100 °C erreicht, wird die Dampfbildung und damit verbunden der Druckaufbau eingeleitet. Bereits zu diesem Zeitpunkt ist es gefährlich, das Kochgefäß zu öffnen. Es ist daher ganz entscheidend, daß in der Aufheizphase das Erreichen der kritischen Temperatur im Wasserinhalt W exakt erfaßt, angezeigt, zur Steuerung der Koch- bbzw. Garzeit oder zur Regelung der Heizleistung ausgenützt wird.

Das Diagramm nach Fig. 1 zeigt nun, daß in der Aufheizphase an der Abgriffstelle 14 die Temperaturdifferenz $\Delta T$ zwischen der Temperatur Tw des Wasserinhaltes W und der Temperatur Ta der Außenfläche des Kochtopfes 10 Null ist. Je größer der Abstand h von der Stellfläche des Topfbodens 11 ist, desto größer wird die Temperaturdifferenz $\Delta T$. Der Abstand ho legt den Abgriffspunkt 14 fest. Vom Abgriffspunkt 14 zur Stellfläche des Topfbodens 11 hin ergibt sich eine umgekehrte Temperaturdifferenz. Wird der Temperatursensor an der Abgriffstelle 14 wärmeleitend mit der Außenfläche des Kochtopfes 10 verbunden, dann ist sichergestellt, daß in der Aufheizphase die Temperatur Tw des Wasserinhaltes W exakt erfaßt wird.

Bei den Kochtöpfen 10 liegt die Abgriffsstelle 14 an dem der Topfwand 12 zugekehrten Anfang des Übergangsbereiches 13 zum Topfboden 11. Diese Abgriffstelle 14 kann bei dieser Ausgestaltung des Kochtopfes 10 ohne vorherige umfangreiche Messungen gewählt werden, ohne eine große Temperaturdifferenz befürchten zu müssen.

Der Teilschnitt nach Fig. 2 zeigt eine Anbringung des Temperatursensors 17 auf der Außenfläche des Kochtopfes 10. Im Bereich der Abgriffstelle 14 steht ein Gewindebolzen 15 ab. Der Temperatursensor 17 ist ein NTC- bzw. PTC-Widerstand, der im Temperaturbereich von etwa 95 °C bis etwa 120 °C vorzugsweise eine lineare Widerstands-Temperatur-Kennlinie aufweist. Dieser NTC- bzw. PTC-Widerstand wird von der Befestigungslasche 16 wärmeleitend umschlossen. Die Befestigungslasche 16 wird mittels der Mutter 19 und der Federscheibe 18 fest mit dem Kochtopf 10 verschraubt und so eine gute wärmeleitende Verbindung hergestellt.

Wie der Teilschnitt nach Fig. 3 zeigt, kann der Temperatursensor 17 auch direkt mit der Außenfläche des Kochtopfes 10 verbunden werden. Die Schicht 20 deutet· eine Kleb- bzw. Schweißverbindung an. Es ist jedoch jede andere Anbringung möglich. Es ist nur auf eine gut wärmeleitende Verbindung zwischen Kochtopf 10 und Temperatursensor 17 zu achten. Der Temperatursensor 17 wird mittels des Ansatzes 22 des am Kochtopf 10 angebrachten Griffes abgedeckt. Der Ansatz 22 bildet dabei der Topfwand 12 zugekehrt eine Aufnahme für das Anschlußkabel 21 des Temperatursensors 17. Das Anschlußkabel 21 führt z. B. zu Anschlußkontakten im Griff, an denen lösbar das Auswertegerät, das die Widerstandsänderungen des Temperatursensors 17 in elektrische Signale umsetzt und Anzeige-, Steuer- oder Regelsignale abgibt, lösbar anschließbar ist. Dabei kann der Griff hohl ausgebildet sein und das Auswertegrät aufnehmen. Die Anschlußkontakte können auch als Steckkontake ausgebildet sein. Das mit daran angepaßten Gegensteckelementen versehene Auswertegerät kann dann an dem Griff angesteckt werden. Zum Reinigen des Kochgefäßes kann das Auswertegerät leicht abgenommen werden. Die Steckverbindung kann auch in den Bereich des mit dem Deckel verbundenen Griffes gelegt werden. Dann ist das Anschlußkabel des Temperatursensors 17 über Schleifkontakte vom Griff des Kochtopfes 10 auf den Griff des Deckels durchzuschalten und dort zu Anschlußkontakten für das Auswertegerät zu führen.

Soll der Temperaturzustand im Kochgefäß einfach erkennbar angezeigt werden, dann hat sich eine Ausgestaltung bewährt, die dadurch gekennzeichnet ist, daß das Auswertegerät bis zum Erreichen einer vorgegebenen kritischen Temperatur von z. B. 98 °C ein erstes Anzeigesignal abgibt und daß das Auswertegerät beim Überschreiten dieser kritischen Temperatur bis zu einer vorgegebenen Grenztemperatur von z. B. 100 °C zusätzlich ein zweites Anzeigesignal abgibt und daß beim Erreichen dieser Grenztemperatur das Auswertegerät das erste und zweite Anzeigesignal abschaltet und ein drittes Anzeigesignal einschaltet. Werden die Anzeigesignale über eine grüne, gelbe und rote Anzeigelampe gegeben, dann sind die Zustände entsprechend ihrer Gefahr nach einer Art Verkehrsampel angezeigt. Die Ansteuerung der Anzeigelampen läßt sich auch variieren.

**Patentansprüche**

1. Einrichtung aus einem aus Kochtopf (10) und Deckel bestehenden Kochgefäß, insbesondere Dampfdruckkochtopf, mit einem am Kochgefäß angebrachten Temperatursensor (17), der ein der Temperatur im Kochgefäß entsprechendes elektrisches Signal abgibt, bei der Temperatursensor (17) auf der Außenseite des Kochtopfes (10) in wärmeleitender Verbindung angebracht ist, dadurch gekennzeichnet, daß der Temperatursensor (17) im Übergangsbereich (13) zwischen Topfboden (11) und Topfwand (12) an einer Abgriffstelle (14) angebracht ist, an der die Temperaturdifferenz ($\Delta T$) zwischen der Temperatur (Tw) des Wasserinhaltes (W) und der Außentemperatur (Ta) an der Abgriffstelle (14) während des Aufheizvorganges annähernd Null ist.

2. Einrichtung nach Anspruch 1, dadurch gekennzeichnet, daß der Temperatursensor (17) direkt mit der Außenfläche des Kochgefäßes verbunden, vorzugsweise verschweißt bzw. wärmeleitend verklebt ist.

3. Einrichtung nach Anspruch 1, dadurch gekennzeichnet, daß der Temperatursensor (17) in einer Befestigungslasche (16) umschlossen und in wärmeleitender Verbindung gehalten ist, die mittels einer Mutter (19) und einer Federscheibe (18) auf einem mit dem Kochtopf (10) verbundenen Gewindebolzen (15) fest verschraubt ist.

4. Einrichtung nach einem der Ansprüche 1 bis 3, dadurch gekennzeichnet, daß die Abgriffstelle (14) an den der Topfwand (12) zugekehrten Anfang des konvexen Übergangsbereiches (13) gelegt ist.

5. Einrichtung nach einem der Ansprüche 1 bis 4, dadurch gekennzeichnet, daß der an dem Kochtopf (10) wärmeleitend festgelegte Temperatursensor (17) mittels eines Ansatzes (22) des an dem Kochtopf (10) angebrachten Griffes abgedeckt ist.

6. Einrichtung nach Anspruch 5, dadurch gekennzeichnet, daß der Ansatz (22) der Topfwand (12) des Kochtopfes (10) zugekehrt eine Aufnahme für ein Anschlußkabel (21) des Temperatursensors (17) aufweist und daß im Griff des Kochtopfes (10) Anschlußkontakte für ein lösbar am Griff anbringbares Auswertegerät vorgesehen sind, an denen das Anschlußkabel (21) angeschlossen ist.

7. Einrichtung nach Anspruch 6, dadurch gekennzeichnet, daß das Auswertegerät in den hohl ausgebildeten Griff des Kochtopfes (10) bzw. Deckels einsetzbar ist.

8. Einrichtung nach Anspruch 6, dadurch gekennzeichnet, daß die Anschlußkontakte als Steckkontakte ausgebildet sind und daß das Auswertegerät mit daran angepaßten Gegensteckelementen versehen ist.

9. Einrichtung nach einem der Ansprüche 1 bis 8, dadurch gekennzeichnet, daß ein NTC (Negativer Temperaturkoeffizient- bzw. PTC (Positiver Temperaturkoeffizient-Widerstand als Temperatursensor (17) verwendet ist, der im Temperaturbereich von etwa 95 °C bis 120 °C eine hinreichend lineare Widerstands-Temperatur-Kennlinie aufweist.

10. Einrichtung nach einem der Ansprüche 6 bis 9, dadurch gekennzeichnet, daß das Auswertegerät bis zum Erreichen einer vorgegebenen kritischen Temperatur (z. B. 98 °C) ein erstes Anzeigesignal (z. B. grüne Anzeigelampe) abgibt.

11. Einrichtung nach Anspruch 10, dadurch gekennzeichnet, daß das Auswertegerät beim Überschreiten der kritischen Temperatur (z. B. 98 °C) bis zu einer vorgegebenen Grenztemperatur (z. B. 100 °C) zusätzlich ein zweites Anzeigesignal (z. B. gelbe Anzeigelampe) abgibt und daß beim Erreichen der Grenztemperatur das Auswertegerät das erste und zweite Anzeigesignal abschaltet und ein drittes Anzeigesignal (z. B. rote Anzeigelampe) einschaltet.

**Claims**

1. Appliance consisting of a cooking vessel, consisting of a cooking pot (10) and lid, especially pressure cooker, with a temperature sensor (17) fitted to the cooking vessel, giving an electrical signal corresponding to the temperature inside of the cooker, whereby the temperature inside of the cooker, whereby the temperature sensor (17) is fitted on the outside of the cooking pot (10) in a heat-conducting manner, characterized by the fact that the temperature sensor (17) is fitted in the transitional area (13) between the bottom of the cooking pot (11) and the wall of the cooking pot (12) on a tap (14), at which the differential temperature (ΔT) between the temperature (Tw) of the water content (W) and the outside temperature (Ta) approximates zero on the tap (14) during the heating phase.

2. Appliance according to claim 1, characterized by the fact that the temperature sensor (17) is directly connected with the outside surface of the cooking vessel, and that it is preferably welded respectively glued together in such a way that it is heat conductive.

3. Appliance according to claim 1, characterized by the fact that the temperature sensor (17) is included in a fixing bracket (16) and is designed as heat conducting connection, which is firmly screwed on a threaded bolt (15) connected to the cooking pot (10) by means of a nut (19) and a spring washer (18).

4. Appliance according to one of the claims 1 to 3, characterized by the fact that the tap (14) is located at the beginning of the convex transitional area (13), which is facing the wall of the cooking pot (12).

5. Appliance according to one of the claims 1 to 4, characterized by the fact that the temperature sensor (17) which is fastened to the cooking pot (10) in a heat-conducting manner, is covered by means of a cover sheet (22) shaped by the handle, fitted to the cooking pot (10).

6. Appliance according to claim 5, characterized by the fact that the cover sheet (22), which faces the wall (12) of the cooking pot (10) is provided with an appliance to take up a connecting cable (21) of the temperature sensor (17) and that in the handle of the cooking pot (10) connecting contacts are provided for an evaluating device which is fitted to the handle so that it can easily be removed, to which the connecting cable (21) is connected.

7. Appliance according to claim 6, characterized by the fact that the evaluating device can be placed into the concave handle of the cooking pot (10), respectively the lid.

8. Appliance according to claim 6, characterized by the fact that the connecting contacts are designed as connectors and that the evaluating device is provided with plug sockets matched to the latter.

9. Appliance according to one of the claims 1 to 8, characterized by the fact that a NTC-resistor (thermistor with negative temperature coefficient), respectively a PTC-resistor (thermistor with positive temperature coefficient) is used as temperature sensor (17), which is characterized by a sufficiently linear resistance-temperature-characteristic curve within the temperature range of approx. 95 °C to 120 °C.

10. Appliance according to one of the claims 6 to 9, characterized by the fact that the evaluating device gives a first alarm signal (e. g. green indicator lamp) until reaching a set critical temperature (e. g. 98 °C).

11. Appliance according to claim 10, characterized by the fact that the evaluation device, when exceeding the critical temperature (e. g. 98 °C) up to a set limit temperature (e. g. 100 °C provides an additional, second alarm signal (e. g. yellow indicator lamp) and that, when reaching the limit temperature, the evaluating device switches off the first and second alarm signal and switches on a third alarm signal (e. g. red indicator lamp).

**Revendications**

1. Dispositif constitué d'un récipient de cuisson consistant en une marmite (10) et un couvercle, en particulier une marmite de cuisson sous pression de vapeur (ou cuiseur sous pression), comportant un détecteur (17) de température appliqué sur le récipient de cuisson et qui émet un signal électrique correspondant à la température régnant dans ce récipient, le détecteur (17) étant appliqué sur le côté externe de la marmite en étant en relation de conduction de chaleur avec celle-ci, dispositif caractérisé en ce que le détecteur (17) de température est appliqué dans la zone (13) de transition convexe entre le fond (11) de la marmite et la paroi (12) de celle-ci en un endroit (14) de mesure où la différence (T) entre la température (Tw) de l'eau (W) contenue dans la marmite et la température externe (Ta) à l'endroit (14) de mesure est approximativement nulle pendant le processus d'échauffement.

2. Dispositif selon la revendication 1, caractérisé en ce que le détecteur (17) de température est directement lié, avantageusement soudé ou collé avec conduction de chaleur, à la surface externe du récipient de cuisson.

3. Dispositif selon la revendication 1, caractérisé en ce que le détecteur (17) de température est enfermé et maintenu en liaison de conduction de chaleur dans un collier (16) de fixation qui est assujetti à l'aide d'un écrou (19) et d'une rondelle élastique (18) à une tige filetée (15) fixée à la marmite (10).

4. Dispositif selon l'une des revendications 1 à 3, caractérisé en ce que l'endroit (14) de mesure est placé au début de la zone (13) de transition convexe du côté tourné vers la paroi (12) de la marmite.

5. Dispositif selon l'une des revendications 1 à 4, caractérisé en ce que le détecteur (17) de température, assujetti, de manière à assurer une conduction de chaleur, à la marmite (10) est recouvert d'un prolongement (22) de la poignée fixée à la marmite (10).

6. Dispositif selon la revendication 5, caractérisé en ce que, vers la paroi (12) de la marmite (10), le prolongement (22) forme un logement destiné à recevoir un câble (21) de raccordement du détecteur (17) de température et en ce qu'il est prévu dans la poignée de la marmite (10) des contacts pour le raccordement d'un appareil de lecture et interprétation reliable de façon amovible à la poignée, contacts auxquels le câble (21) de raccordement est raccordé.

7. Dispositif selon la revendication 6, caractérisé en ce que l'appareil de lecture et interprétation est insérable dans la poignée, réalisée creuse, de la marmite (10) ou de son couvercle.

8. Dispositif selon la revendication 6, caractérisé en ce que les contacts de raccordement sont réalisés sous forme de contacts à fiches et en ce que l'appareil de lecture et interprétation comporte des éléments complémentaires correspondant aux liaisons par enfichage.

9. Dispositif selon l'une des revendications 1 à 8, caractérisé en ce qu'on utilise comme détecteur (17) de température une résistance NTC (à coefficient négatif de température) ou PTC (à coefficient positif de température), qui présente, dans l'intervalle de température allant d'environ 95 °C à 120 °C, une caractéristique résistance-température suffisamment linéaire.

10. Dispositif selon l'une des revendications 6 à 9, caractérisé en ce que l'appareil de lecture et interprétation émet, jusqu'à ce que soit atteinte une température prédéterminée d'importance critique (par exemple 98 °C), un premier signal indicateur (par exemple, il allume une lampe témoin verte).

11. Dispositif selon la revendication 10, caractérisé en ce que, quand la température d'importance critique (par exemple 98 °C) est excédée et jusqu'à une température limite prédéterminée (par exemple 100 °C), l'appareil de lecture et interprétation émet en outre un second signal indicateur (il allume par exemple une lampe-témoin jaune), et lorsque la température limite est atteinte, l'appareil de lecture et interprétation éteint les premier et second signaux indicateurs et émet un troisième signal indicateur (par exemple, il allume une lampe-témoin rouge).

Fig.1

Fig.2

Fig.3